# EUROPEAN PATENT APPLICATION

(11) **EP 4 450 824 A1**
(43) Date of publication of application: **23.10.2024**
(21) Application number: 23780269.9
(22) Date of filing: 24.03.2023
(51) Int. Cl.: F04D 29/58

(54) **COMPRESSOR AND REFRIGERATION DEVICE**

(30) Priority: 30.03.2022 JP 2022057013
(71) Applicant: DAIKIN INDUSTRIES, LTD., Osaka-shi, Osaka 530-0001 (JP)
(72) Inventor: TANAKA, Koichi, Osaka-shi, Osaka 530-0001 (JP); NISHIMURA, Kosuke, Osaka-shi, Osaka 530-0001 (JP); IWATA, Arihiro, Osaka-shi, Osaka 530-0001 (JP); FUKUDA, Daigo, Osaka-shi, Osaka 530-0001 (JP); KAWACHIYA, Yuki, Osaka-shi, Osaka 530-0001 (JP)
(74) Representative: Goddar, Heinz J.
(86) International application number: PCT/JP2023/012028
(87) International publication number: WO 2023/190259

(57) **Abstract**

A compressor includes a rotary shaft (15), a motor (18) configured to rotate the rotary shaft (15), and a gas bearing configured to support the rotary shaft (15). A passage (Z) through which refrigerant for cooling a coil (17) of the motor (18) and the gas bearing flows is provided between the coil (17) and a housing (20) of the gas bearing. The gas bearing includes a radial gas bearing (40) configured to rotatably support the rotary shaft (15), and the passage (Z) includes a first passage (Z 1) provided between the coil (17) of the motor (18) and a housing (21) of the radial gas bearing (40).

## Description

### TECHNICAL FIELD

The present disclosure relates to a compressor and a refrigeration apparatus.

### BACKGROUND ART

Patent Document 1 discloses a turbo compressor. In the turbo compressor described in Patent Document 1, an injection nozzle splashes coolant on the inner peripheral surface of a motor case, diffuses the coolant in a mist form, sprays the coolant on a coil, and cools the coil by vaporization heat.

### CITATION LIST

### PATENT DOCUMENT

Patent Document 1: WO2013/011939

### SUMMARY OF THE INVENTION

### TECHNICAL PROBLEM

A gas bearing is sometimes used in a compressor. As compared with, e.g., a sliding bearing using liquid such as oil and a rolling bearing using oil for cooling, the gas bearing cannot use oil for cooling because only gas (working fluid) is supplied, and for this reason, generally has poor cooling performance.

Further, Patent Document 1 discloses a configuration in which a coil is immersed in liquid refrigerant. However, in a case where the gas bearing is used in the compressor, the gas bearing may be damaged when liquid refrigerant is introduced to a bearing surface of the gas bearing, and for this reason, the entire periphery of the gas bearing cannot be filled with the liquid refrigerant.

In the compressor using the gas bearing, portions to be cooled are mainly a motor coil and the gas bearing which are heat sources. However, if these portions cannot be efficiently cooled and such cooling is insufficient, the temperature of the coating of the coil may exceed an allowable temperature, and the temperature of the coating of the gas bearing may reach a seizing temperature.

It is an object of the present disclosure to enable efficient cooling of a motor coil and a gas bearing.

### SOLUTION TO THE PROBLEM

A first aspect is directed to a compressor. The compressor includes a rotary shaft (15), a motor (18) configured to rotate the rotary shaft (15), and a gas bearing configured to support the rotary shaft (15). A passage (Z) through which refrigerant for cooling a coil (17) of the motor (18) and the gas bearing flows is provided between the coil (17) and a housing (20) of the gas bearing.

According to the first aspect, the coil (17) of the motor (18) and the gas bearing can be efficiently cooled.

A second aspect is an embodiment of the first aspect. In the second aspect, the gas bearing includes a radial gas bearing (40) configured to rotatably support the rotary shaft (15), and the passage (Z) includes a first passage (Z1) provided between the coil (17) of the motor (18) and a housing (21) of the radial gas bearing (40).

In the second aspect, the coil (17) of the motor (18) and the radial gas bearing (40) can be efficiently cooled.

A third aspect is an embodiment of the second aspect. In the third aspect, the radial gas bearing (40) is located inside the coil (17) as viewed in the radial direction of the rotary shaft (15).

In the third aspect, the radial gas bearing (40) can be effectively cooled.

A fourth aspect is an embodiment of any one of the first to third aspects. In the fourth aspect, the gas bearing includes a thrust gas bearing (60) configured to support the rotary shaft (15) in an axial direction, and the passage (Z) includes a second passage (Z2) provided between the coil (17) of the motor (18) and a housing of the thrust gas bearing (60).

In the fourth aspect, the coil (17) of the motor (18) and the thrust gas bearing (60) can be efficiently cooled.

A fifth aspect of the present disclosure is an embodiment of the second or third aspect. In the fifth aspect, the gas bearing includes a thrust gas bearing (60) configured to support the rotary shaft (15) in an axial direction, the passage (Z) includes a second passage (Z2) provided between the coil (17) of the motor (18) and a housing of the thrust gas bearing (60), and the first passage (Z1) communicates with the second passage (Z2).

In the fifth aspect, the coil (17) of the motor (18), the thrust gas bearing (60), and the radial gas bearing (40) can be efficiently cooled.

A sixth aspect is an embodiment of the fifth aspect. In the sixth aspect, the width dimension (d1) of the first passage (Z1) and the width dimension (d2) of the second passage (Z2) are equal to each other.

In the sixth aspect, the refrigerant can flow through the first passage (Z 1) and the second passage (Z2) at a uniform flow velocity. Thus, the coil (17) of the motor (18), the thrust gas bearing (60), and the radial gas bearing (40) can be uniformly cooled by the refrigerant, and cooling performance using the refrigerant can be improved.

A seventh aspect is an embodiment of any one of the first to sixth aspects. In the seventh aspect, part of the coil (17) is immersed in liquid refrigerant (E).

In the seventh aspect, the part of the coil (17) can be cooled by the liquid refrigerant (E).

An eighth aspect is directed to a refrigeration apparatus. The refrigeration apparatus includes the compressor (10).

In the eighth aspect, the coil (17) of the motor (18) and the gas bearing can be efficiently cooled.

### BRIEF DESCRIPTION OF THE DRAWINGS

FIG. 1 is a schematic diagram illustrating an entire configuration of a refrigeration apparatus according to an embodiment.
FIG. 2 is a sectional view of a compressor.
FIG. 3 is a schematic view of the compressor.
FIG. 4 is a schematic view of the compressor.
FIG. 5 is a schematic view illustrating a configuration in which a first radial gas bearing is extended in an axial direction as compared with the compressor illustrated in FIG. 4.

### DESCRIPTION OF EMBODIMENTS

An embodiment of the present disclosure will be described in detail below with reference to the drawings. The present disclosure is not limited to the embodiments shown below, and various changes can be made within the scope without departing from the technical concept of the present disclosure. Each of the drawings is intended to illustrate the present disclosure conceptually, and dimensions, ratios, or numbers may be exaggerated or simplified as necessary for the sake of ease of understanding.

An exemplary embodiment will be described in detail below based on the drawings.

### <Overview of Refrigeration Apparatus>

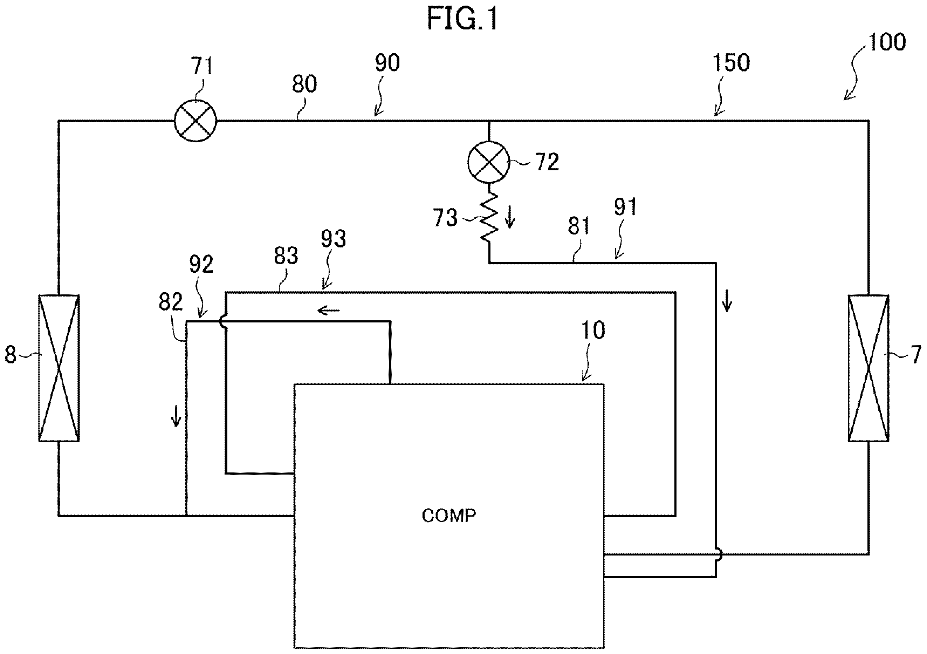

A refrigeration apparatus (100) according to this embodiment will be described with reference to FIG. 1. FIG. 1 is a schematic diagram illustrating a refrigerant circuit (150) of the refrigeration apparatus (100). The refrigeration apparatus (100) includes the refrigerant circuit (150) filled with refrigerant. The refrigerant circulates in the refrigerant circuit (150) to perform a vapor compression refrigeration cycle. The refrigerant circuit (150) includes a compressor (10), a condenser (7), a first expansion valve (71), an evaporator (8), a main circuit (90), a branch circuit (supply path) (91), a second expansion valve (72), a heater (73), a return circuit (92), and an auxiliary circuit (93). The compressor (10) is, for example, a centrifugal compressor.

The main circuit (90) allows the refrigerant to circulate to perform the vapor compression refrigeration cycle. In the refrigeration cycle, gas refrigerant compressed by the compressor (10) dissipates heat to air in the condenser (7). At this time, the gas refrigerant is liquefied and turns into liquid refrigerant. The liquid refrigerant having dissipated heat is decompressed by the first expansion valve (71). The decompressed liquid refrigerant is evaporated in the evaporator (8). At this time, the liquid refrigerant is evaporated and turns into gas refrigerant. The evaporated gas refrigerant is sucked into the compressor (10). The compressor (10) compresses the sucked gas refrigerant.

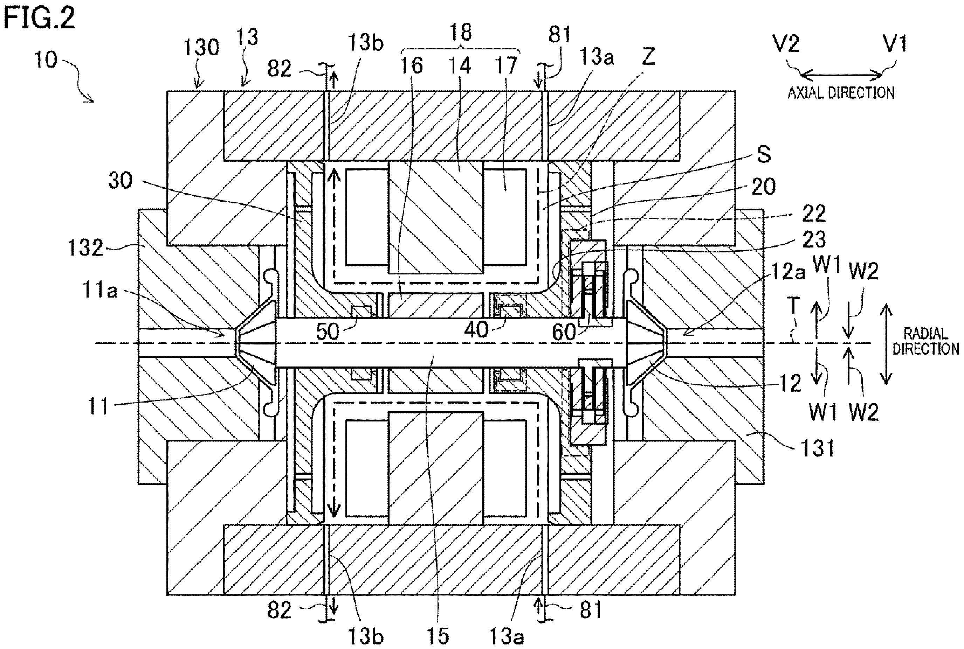

The compressor (10) illustrated in FIGS. 1 and 2 includes a low-pressure impeller (11) and a high-pressure impeller (12) connected to each other in series. The compressor (10) compresses the refrigerant in two stages by the low-pressure impeller (11) and the high-pressure impeller (12).

The condenser (7) and the evaporator (8) illustrated in FIG. 1 are, for example, cross-fin type fin-and-tube heat exchangers. A fan is provided near each of the condenser (7) and the evaporator (8). Each of the first expansion valve (71) and the second expansion valve (72) is an electronic control valve having a variable opening degree.

The compressor (10), the condenser (7), the first expansion valve (71), and the evaporator (8) are sequentially connected together through a main pipe (80) to form the main circuit (90). The refrigerant flows through the main pipe (80). One end of a branch pipe (81) is connected to a portion of the main pipe (80) between the condenser (7) and the first expansion valve (71). The refrigerant flows through the branch pipe (81). The second expansion valve (72) and the heater (73) are sequentially located at an intermediate portion of the branch pipe (81) from near the one end. The other end of the branch pipe (81) is connected to the compressor (10). The branch pipe (81), the second expansion valve (72), and the heater (73) form the branch circuit (91).

The liquid refrigerant flowing through the branch circuit (91) is decompressed by the second expansion valve (72). The decompressed liquid refrigerant is heated in the heater (73). At this time, the liquid refrigerant is evaporated and turns into gas refrigerant. The gas refrigerant is introduced into the compressor (10) through the branch pipe (81).

One end of a return pipe (82) is connected to a portion of the main pipe (80) between the evaporator (8) and the compressor (10). The refrigerant flows through the return pipe (82). The other end of the return pipe (82) is connected to the compressor (10). The return pipe (82) forms the return circuit (92).

The auxiliary circuit (93) includes an auxiliary pipe (83). One end of the auxiliary pipe (83) is connected to an outer peripheral portion of a low-pressure impeller chamber (11a), and the other end thereof is connected to a center portion of a high-pressure impeller chamber (12a). The auxiliary pipe (83) connects the discharge side of the low-pressure impeller chamber (11a) and the suction side of the high-pressure impeller chamber (12a) together. The refrigerant compressed in the low-pressure impeller chamber (11a) is sucked into the high-pressure impeller chamber (12a) through the auxiliary pipe (83).

The refrigeration apparatus (100) is an air conditioner, for example. The air conditioner may be a cooling and heating machine that switches between cooling and heating. In this case, the refrigerant circuit (150) includes a switching mechanism that switches the direction of circulation of the refrigerant. The switching mechanism is a four-way switching valve, for example. The air conditioner may be a device for cooling only or a device for heating only.

The refrigeration apparatus (100) may be a water heater, a chiller unit, or a cooling apparatus that cools air in an internal space. The cooling apparatus is for cooling air inside a refrigerator, a freezer, or a container, for example.

### <Schematic Configuration of Compressor>

The compressor (10) according to this embodiment will be described below with reference to FIG. 2. FIG. 2 is a longitudinal sectional view of the compressor (10). In the following description, the direction of extension of a rotary shaft (15) of the compressor (10) may be referred to as an "axial direction," and a direction perpendicular to the axial direction may be referred to as a "radial direction." However, these directions do not limit the orientation and other features of the compressor (10) during use or assembly.

The compressor (10) includes a casing (13), a stator (14), a rotor (16), the rotary shaft (15), a coil (17), the low-pressure impeller (11), the high-pressure impeller (12), a first radial gas bearing (40), a second radial gas bearing (50), and a thrust gas bearing (60).

The casing (13) houses therein other members forming the compressor (10). The casing (13) has a barrel (130), a first closing member (131), and a second closing member (132). The barrel (130) is a substantially tubular member extending in the axial direction. One side (V1) of the barrel (130) in the axial direction is closed by the first closing member (131). The high-pressure impeller chamber (12a) is formed between the first closing member (131) and the high-pressure impeller (12) described above. The other side (V2) of the barrel (130) in the axial direction is closed by the second closing member (132). The low-pressure impeller chamber (11a) is formed between the second closing member (132) and the low-pressure impeller (11) described above.

The stator (14) is substantially cylindrical. The stator (14) is fixed to the inner peripheral surface of the barrel (130) at a center portion of the barrel (130) in the axial direction. The rotor (16) is substantially cylindrical. The rotor (16) is disposed inside (W2) the stator (14) in the radial direction. The inside (W2) in the radial direction is a side near the axis (T) of the rotary shaft (15) in the radial direction. The outside (W1) in the radial direction is a side away from the axis (T) of the rotary shaft (15) in the radial direction.

The rotor (16) is spaced apart from the stator (14) in the radial direction. The rotor (16) is provided with a magnet. The stator (14) is provided with the coil (17). In the section of the compressor (10) which passes through the axis (T) of the rotary shaft (15) and is parallel with the radial direction (see FIG. 2), the coil (17) is disposed on each side of the stator (14) in the radial direction. Interaction between magnetic flux and current between the stator (14) and the rotor (16) causes the rotor (16) to rotate relative to the stator (14).

The rotary shaft (15) extends in the axial direction. The rotary shaft (15) is disposed inside (W2) the rotor (16) in the radial direction. The stator (14), the rotor (16), and the coils (17) form a motor (18). The rotor (16) is fixed to the rotary shaft (15). The rotary shaft (15) rotates together with the rotor (16). The high-pressure impeller (12) is fixed to one side (V1) of the rotary shaft (15) in the axial direction. The low-pressure impeller (11) is fixed to the other side (V2) of the rotary shaft (15) in the axial direction.

The first radial gas bearing (40) is located on one side (V1) of the rotor (16) in the axial direction. The first radial gas bearing (40) forms a tubular gas film between the rotary shaft (15) and the barrel (130), so that the one side (V1) of the rotary shaft (15) in the axial direction is rotatably supported relative to the barrel (130). The first radial gas bearing (40) is a non-contact gas bearing (e.g., gas bearing that floats with gas, such as a foil bearing).

The second radial gas bearing (50) is located on the other side (V2) of the rotor (16) in the axial direction. The second radial gas bearing (50) forms a tubular gas film between the rotary shaft (15) and the barrel (130), so that the other side (V2) of the rotary shaft (15) in the axial direction is rotatably supported relative to the barrel (130). The second radial gas bearing (50) is a non-contact gas bearing (e.g., gas bearing that floats with gas, such as a foil bearing).

The thrust gas bearing (60) is located on one side (V1) of the first radial gas bearing (40) in the axial direction. The thrust gas bearing (60) supports the rotary shaft (15) in the axial direction. The thrust gas bearing (60) is a non-contact gas bearing (e.g., gas bearing that floats with gas, such as a foil bearing).

The first radial gas bearing (40) and the thrust gas bearing (60) are held by a first holding member (20). The first holding member (20) is an example of a housing of the gas bearing of the present invention. The second radial gas bearing (50) is held by a second holding member (30). In terms of a position in the axial direction, the first holding member (20) is located on the one side (V1) of the rotor (16) in the axial direction, and the second holding member (30) is located on the other side (V2) of the rotor (16) in the axial direction. Each of the first holding member (20) and the second holding member (30) is formed in a substantially disc shape. The outer peripheral surface of each of the first holding member (20) and the second holding member (30) is fixed to the inner wall of the casing (13). The rotary shaft (15) is inserted into a center portion of each of the first holding member (20) and the second holding member (30).

Inside the casing (13), a space (S) is formed by the stator (14), the rotor (16), the coils (17), the first holding member (20), and the second holding member (30). An inlet flow path (13a) and an outlet flow path (13b) are formed in the casing (13). Each of the inlet flow path (13a) and the outlet flow path (13b) is a hole allowing the outside of the casing (13) to communicate with the space (S) in the casing (13). In this embodiment, the casing (13) is provided with two inlet flow paths (13a) and two outlet flow paths (13b). However, the number of inlet flow paths (13a) and the number of outlet flow paths (13b) are not particularly limited.

The inlet flow path (13a) communicates with the branch pipe (81) (see FIG. 1). The inlet flow path (13a) communicates with a space located between the coil (17) and the first holding member (20) in the space (S) in the casing (13).

The outlet flow path (13b) communicates with the return pipe (82) (see FIG. 1). The outlet flow path (13b) communicates with a space located between the coil (17) and the second holding member (30) in the space (S) in the casing (13). The outlet flow path (13b) is located on the other side (V2) of the inlet flow path (13a) in the radial direction.

### <Configuration of Passage>

A passage (Z) through which the refrigerant flows is provided in the space (S) in the casing (13). The flow path (Z) is provided so as to pass from the inlet flow path (13a) to the outlet flow path (13b) through the space between the coil (17) and the first holding member (20), a space between the stator (14) and the rotor (16), and the space between the coil (17) and the second holding member (30). Each of the first holding member (20) and the second holding member (30) has a guide function of guiding the refrigerant along the passage (Z).

The refrigerant (gas refrigerant) flowing through the branch pipe (81) is sent to the space (S) in the casing (13) through the inlet flow path (13a), flows through the passage (Z) in the space (S) in the casing (13), and is then sent to the return pipe (82) through the outlet flow path (13b). The coil (17), the first radial gas bearing (40), the second radial gas bearing (50), the thrust gas bearing (60), etc. are cooled by the refrigerant flowing through the flow path (Z).

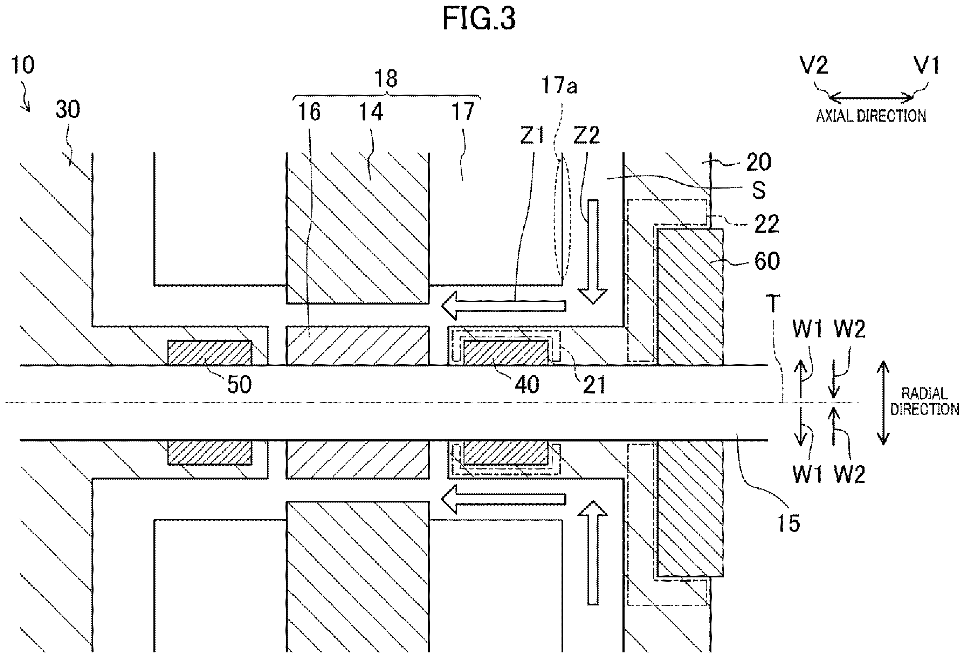

As illustrated in FIGS. 2 and 3, the passage (Z) includes a first passage (Z1) and a second passage (Z2).

The first passage (Z 1) is a portion of the passage (Z) between the coil (17) and a housing (21) of the first radial gas bearing (40). The housing (21) of the first radial gas bearing (40) is a portion of the first holding member (20) located around the first radial gas bearing (40). In this embodiment, the first passage (Z 1) extends in the axial direction. In this embodiment, the refrigerant flows through the first passage (Z 1) toward the other side (V2) in the axial direction.

The second passage (Z2) is a portion of the passage (Z) between the coil (17) and a housing (22) of the thrust gas bearing (60). The housing (22) of the thrust gas bearing (60) is a portion of the first holding member (20) located around the thrust gas bearing (60). In this embodiment, the second passage (Z2) extends in the radial direction. In this embodiment, the refrigerant flows through the first passage (Z 1) inward (W2) in the radial direction.

The second passage (Z2) is provided upstream of the first passage (Z 1). The first passage (Z 1) communicates with the second passage (Z2).

### < Advantages >

As described above, the passage (Z) through which the refrigerant for cooling the motor (18) and the gas bearing flows is provided between the coil (17) of the motor (18) and the first holding member (20) (the housing of the gas bearing) (see FIG. 2). With this configuration, the refrigerant flows through the passage (Z) so that both the coil (17) of the motor (18) and the gas bearing can be cooled. Thus, two components (coil (17) and gas bearing) can be cooled using the single passage (Z), and the coil (17) of the motor (18) and the gas bearing can be efficiently cooled.

As illustrated in FIGS. 2 and 3, the gas bearing includes the first radial gas bearing (40) rotatably supporting the rotary shaft (15). The passage (Z) includes the first passage (Z 1) provided between the coil (17) of the motor (18) and the housing (21) of the first radial gas bearing (40). With this configuration, the refrigerant flows through the first passage (Z 1) so that both the coil (17) and the first radial gas bearing (40) can be cooled by the refrigerant and can be efficiently cooled.

As illustrated in FIGS. 2 and 3, the gas bearing includes the thrust gas bearing (60) supporting the rotary shaft (15) in the axial direction. The passage (Z) includes the second passage (Z2) provided between the coil (17) of the motor (18) and the housing (22) of the thrust gas bearing (60). With this configuration, the refrigerant flows through the second passage (Z2) so that both the coil (17) and the thrust gas bearing (60) can be cooled by the refrigerant and can be efficiently cooled.

### <Variations>

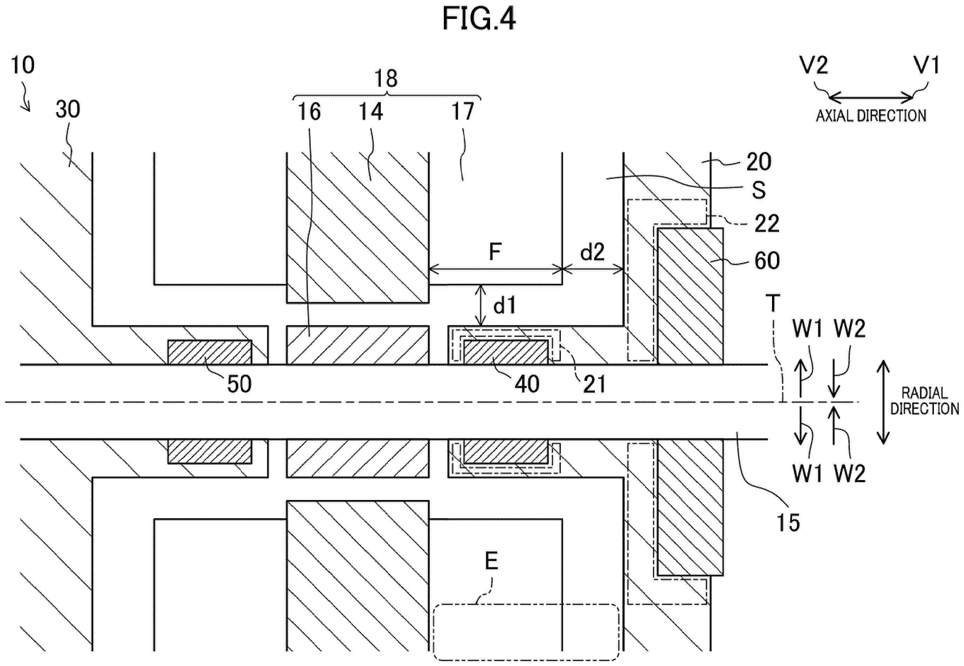

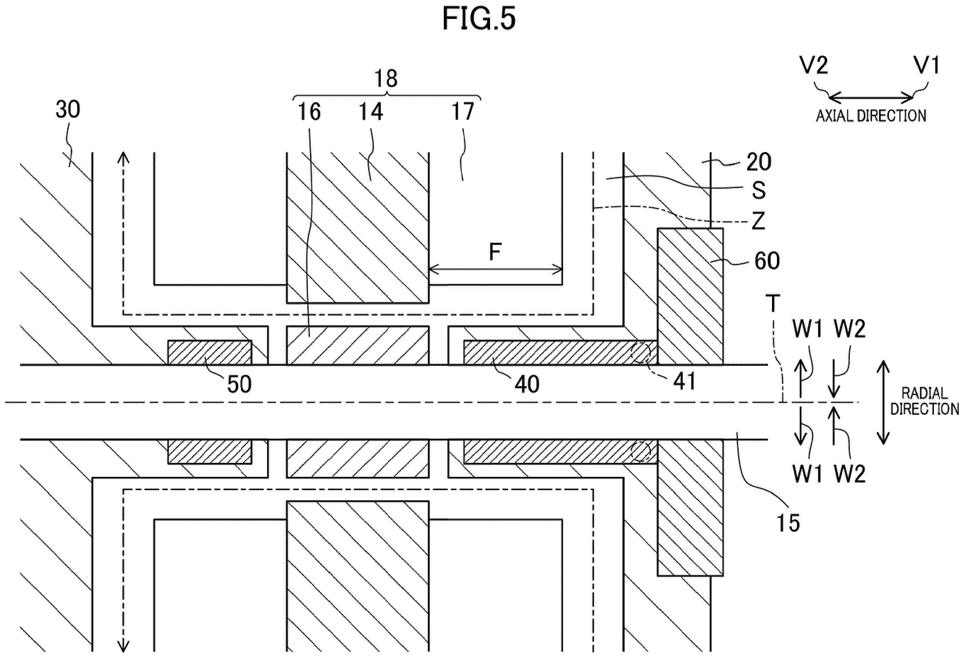

As illustrated in FIG. 4, the first radial gas bearing (40) may be located inside the coil (17) as viewed in the radial direction. In this case, as illustrated in FIG. 4, the first radial gas bearing (40) is provided so as not to protrude in the axial direction from a region (F) where the coil (17) is provided as viewed in the radial direction. For example, as illustrated in FIG. 5, in a case where the first radial gas bearing (40) is provided so as to protrude in the axial direction from the region (F) where the coil (17) is provided as viewed in the radial direction, the protruding portion (41) of the first radial gas bearing (40) is separated from the passage (Z), and for this reason, a performance of cooling the protruding portion (41) of the first radial gas bearing (40) by the refrigerant flowing through the passage (Z) is degraded. However, as illustrated in FIG. 4, the first radial gas bearing (40) is provided so as not to protrude in the axial direction from the region (F) where the coil (17) is provided as viewed in the radial direction, so that a portion of the first radial gas bearing (40) separated from the passage (Z) can be reduced and the entire first radial gas bearing (40) can be disposed near the passage (Z). As a result, the first radial gas bearing (40) can be effectively cooled by the refrigerant flowing through the passage (Z).

As illustrated in FIG. 4, the width dimension (d1) of the first passage (Z1) and the width dimension (d2) of the second passage (Z2) may be the same as each other (also including substantially the same dimension). With this configuration, the refrigerant can flow through the first passage (Z 1) and the second passage (Z2) at the uniform flow velocity. As a result, the coil (17) of the motor (18), the first radial gas bearing (40), and the thrust gas bearing (60) can be uniformly cooled by the refrigerant, and a performance of cooling the coil (17), the first radial gas bearing (40), and the thrust gas bearing (60) by the refrigerant can be improved. The width dimension (d1) of the first passage (Z 1) is the dimension of the first passage (Z 1) in a direction perpendicular to a direction in which the refrigerant flows. The width dimension (d2) of the second passage (Z2) is the dimension of the second passage (Z2) in a direction perpendicular to a direction in which the refrigerant flows.

As illustrated in FIG. 4, part of the coil (17) may be immersed in the liquid refrigerant (E). With this configuration, the part of the coil (17) can be cooled by the liquid refrigerant (E).

As illustrated in FIG. 2, in the first holding member (20), a portion (23) forming a corner of the passage (Z) (coupling portion between the first passage (Z 1) and the second passage (Z2) in FIG. 3) may be curved in an R shape. With this configuration, when the refrigerant flows from the second passage (Z2) to the first passage (Z 1), the refrigerant can smoothly flow along the R shape of the passage (Z).

As illustrated in FIG. 3, an end portion (17a) of the coil (17) on one side (V1) in the axial direction may have a flat shape along the radial direction. With this configuration, the refrigerant can be smoothly sent in the second passage (Z2).

While the embodiment and variations thereof have been described above, it will be understood that various changes in form and details may be made without departing from the spirit and scope of the claims. The embodiment, the variation thereof, and the other embodiments may be combined and replaced with each other without deteriorating intended functions of the present disclosure.

### INDUSTRIAL APPLICABILITY

As described above, the present disclosure is useful for a compressor and a refrigeration apparatus.

### DESCRIPTION OF REFERENCE CHARACTERS

- 10: Compressor
- 15: Rotary Shaft
- 17: Coil
- 18: Motor
- 20: First Holding Member (Housing)
- 21: Housing of First Radial Gas Bearing (Housing of Radial Gas Bearing)
- 22: Housing of Thrust Gas Bearing
- 40: First Radial Gas Bearing
- 60: Thrust Gas Bearing
- 100: Refrigeration Apparatus
- Z: Passage
- Z 1: First Passage
- Z2: Second Passage

## Claims

1. A compressor comprising:
a rotary shaft (15);
a motor (18) configured to rotate the rotary shaft (15); and
a gas bearing configured to support the rotary shaft (15),
a passage (Z) through which refrigerant for cooling a coil (17) of the motor (18) and the gas bearing flows being provided between the coil (17) and a housing (20) of the gas bearing.

2. The compressor of claim 1, wherein
the gas bearing includes a radial gas bearing (40) configured to rotatably support the rotary shaft (15), and
the passage (Z) includes a first passage (Z 1) provided between the coil (17) of the motor (18) and a housing (21) of the radial gas bearing (40).

3. The compressor of claim 2, wherein
the radial gas bearing (40) is located inside the coil (17) as viewed in a radial direction of the rotary shaft (15).

4. The compressor of any one of claims 1 to 3, wherein
the gas bearing includes a thrust gas bearing (60) configured to support the rotary shaft (15) in an axial direction, and
the passage (Z) includes a second passage (Z2) provided between the coil (17) of the motor (18) and a housing of the thrust gas bearing (60).

5. The compressor of claim 2 or 3, wherein
the gas bearing includes a thrust gas bearing (60) configured to support the rotary shaft (15) in an axial direction,
the passage (Z) includes a second passage (Z2) provided between the coil (17) of the motor (18) and a housing of the thrust gas bearing (60), and
the first passage (Z 1) communicates with the second passage (Z2).

6. The compressor of claim 5, wherein
a width dimension (d1) of the first passage (Z 1) and a width dimension (d2) of the second passage (Z2) are equal to each other.

7. The compressor of any one of claims 1 to 6, wherein
part of the coil (17) is immersed in liquid refrigerant (E).

8. A refrigeration apparatus comprising: the compressor (10) of any one of claims 1 to 7.
